# FASCICULE DE BREVET EUROPEEN

(11) **EP 4 421 461 B1**
(45) Date de publication et mention de la délivrance du brevet: **28.10.2026**
(21) Numéro de dépôt: 24159117.1
(22) Date de dépôt: 22.02.2024
(51) Int. Cl.: G01J 3/28, G01J 3/02, G02B 1/00

(54) **SYSTÈME D'IMAGERIE**
BILDGEBUNGSSYSTEM
IMAGING SYSTEM

(30) Priorité: 23.02.2023 FR 2301642
(43) Date de publication de la demande: 28.08.2024
(73) Titulaire: THALES, 92190 Meudon (FR); Centre National de la Recherche Scientifique, 75016 Paris (FR)
(72) Inventeur: BILLUART, Jules, 91120 Palaiseau (FR); HÉRON, Sébastien, 91120 Palaiseau (FR); VIARD, Thierry, 06156 Cannes la Bocca (FR); BENARD, Hervé, 06156 Cannes la Bocca (FR); LEQUIME, Michel, 13120 Gardanne (FR)
(74) Mandataire: Atout PI Laplace

(56) Documents cités:
- EP-A1- 4 071 819
- WO-A1-2020/222949
- BILLUART JULES: "Conception d'optiques planes multifonctionelles par stucturation sub-longueur d'onde", 25 October 2021 (2021-10-25), pages 1 - 276, XP093114701, Retrieved from the Internet <URL:https://www.theses.fr/2021AIXM0395> [retrieved on 20231221]
- LIU XINYU ET AL: "A compact compressive hyperspectral imaging system based on metasurface", PROCEEDINGS OF THE SPIE, SPIE, US, vol. 12317, 4 January 2023 (2023-01-04), pages 123170Z - 123170Z, XP060171233, ISSN: 0277-786X, ISBN: 978-1-5106-5738-0, DOI: 10.1117/12.2643871
- JIAWEI YANG ET AL: "Deep-learning-based on-chip rapid spectral imaging with high spatial resolution", ARXIV.ORG, CORNELL UNIVERSITY LIBRARY, 201 OLIN LIBRARY CORNELL UNIVERSITY ITHACA, NY 14853, 16 January 2023 (2023-01-16), XP091414880

## Description

### DOMAINE TECHNIQUE

L'invention concerne les systèmes d'imagerie et en particulier, les systèmes d'imagerie hyperspectraux comprenant des métasurfaces.

### ARRIÈRE-PLAN

La miniaturisation des systèmes d'imagerie est omniprésente dans les technologies émergentes, tels les systèmes de microlentille sur les téléphones portables, les appareils photos compacts, ou encore les camera industrielles. La réduction de l'encombrement et du poids du système sont souvent les principales motivations, et permettent d'intégrer de nouvelles fonctionnalités tout en respectant les contraintes de volume et de masse des systèmes d'imagerie.

La miniaturisation des composants s'accompagne d'une exigence accrue des performances optiques du système d'imagerie. Par exemple, certaines caméras permettent d'imager des scènes d'intérêt à 360°, à différentes bandes spectrales du visible à l'infrarouge pour une vision de jour comme de nuit. Cette multiplicité des fonctionnalités (c'est-à-dire imagerie grand-champ et imagerie large bande) augmente la complexité des systèmes d'imagerie. Cette complexité généralement adressée par une séparation des fonctionnalités en multiples voies d'acquisition. Ainsi, deux systèmes optiques distincts sont dédiés séparément à la bande visible et infra-rouge, au prix d'une augmentation de la taille du système.

Parmi les composants optiques miniaturisés, les métasurfaces ont récemment démontré des fonctions d'imagerie grand champ ou multi-spectrales. Par exemple, dans SHALAGINOV, Mikhail Y., AN, Sensong, YANG, Fan, et al. A single-layer panoramic metalens with> 170 diffraction-limited field of view. Preprint at arXiv https://arxiv. org/abs/1908.03626, 2019, une métasurface avec un champ de vision (Field Of View) supérieur à 170° a été démontrée. Les métasurfaces sont des composants optiques constitués de nano-éléments d'une taille inférieure à la longueur d'onde d'utilisation et qui peuvent introduire un indice de réfraction efficace et de la dispersion, qui sont dictés principalement par leurs paramètres géométriques et la disposition des nano-éléments plutôt que par la composition du matériau. De plus, US10634557B2 exploite également le caractère dispersif des métasurfaces pour séparer des composantes spectrales dans un plan focal.

Cependant, dans SHALAGINOV et al. précité, la fonctionnalité n'est efficace qu'à une seule longueur d'onde, réduisant la possibilité d'imager sur une ou plusieurs bandes spectrales. Quant à US10634557B2, une métasurface séparant plusieurs longueurs d'onde dans un plan focal à un seul champ est divulguée, limitant son potentiel d'imagerie.

US20190178714 et US20200348176 divulguent l'utilisation de métasurfaces optiques pour réaliser de l'imagerie hyperspectrale. En particulier, ces inventions permettent de réaliser une fonction de spectromètre, c'est-à-dire une séparation des longueurs d'onde d'un faisceau incident sur un détecteur. Le spectromètre ainsi réalisé image une incidence (ou un point de champ) sur le détecteur. Cependant, ces documents ne divulguent pas la séparation des longueurs d'ondes aux différents points de champ nécessaire pour réaliser un spectroimageur.

De plus, US10634557 divulgue également un spectromètre comprenant des métasurfaces optiques. Ce document décrit la réalisation d'une fonction d'imagerie hyperspectrale. Les métasurfaces sont disposées en cascade de part et d'autre d'un substrat sur lequel est déposée une fine couche de métal, permettant de multiples réflexions au sein de l'architecture avant focalisation sur un détecteur. Cependant, les différentes métasurfaces utilisées dans cette architecture adressent simultanément la totalité des champs incidents et des longueurs d'onde associées. De fait, chaque métasurface doit correctement renvoyer les différents champs à chaque longueur d'onde dans la bonne direction. Cette augmentation des contraintes à l'échelle d'une métasurface réduit de fait la gamme spectrale ou angulaire adressable par l'ensemble des composants structurés de l'architecture. La thèse de Billuart Jules: "Conception d'optiques planes multifonctionelles par structuration sub-longueur d'onde" divulgue également un système d'imagerie hyperspectral comprenant une métasurface.

### RÉSUMÉ

Pour répondre aux problèmes rencontrés dans l'état de l'art, l'invention a pour objet un système d'imagerie dans lequel l'intégration des multiples fonctionnalités, imagerie grand champ avec plusieurs bandes spectrales, est adressée par une architecture optique comprenant une matrice de métasurfaces, chacune des métasurfaces adressant une gamme spectrale spécifique sur une faible gamme de champ incident. L'intégralité du champ de vision est alors reconstruite en collectant la réponse optique de chaque métasurface prise individuellement. Le système permet d'alléger et de compacter le système d'imagerie, tout en répondant à des besoins multifonctionnel.

En particulier, l'invention vient à améliorer la situation, en proposant un système d'imagerie selon la revendication 1.

Ainsi dans la présente invention, en divisant le champ de vision en multiples sous-champs adressés individuellement par un collimateur et une métasurface associée, la complexité de la réponse optique attendue par un seul composant est diluée sur un ensemble de sous-composants. L'utilisation de métasurfaces dans une architecture optique multifonctionnelle permet d'obtenir un système plus léger que les systèmes conventionnels. De plus, les métasurfaces permettant de multiples degrés de liberté (en changeant l'architecture des métasurfaces), il est possible de contrôler la dispersion de façon arbitraire, et ainsi de générer une fonction optique différente à chaque longueur d'onde sur une plage spectrale d'intérêt. Ce contrôle des propriétés optiques à chaque longueur d'onde offre alors un plus vaste choix d'architectures pouvant répondre à de nombreuses applications. Enfin, le flux perçu au niveau du détecteur peut être maintenu constant malgré la miniaturisation des composants, et ce en diminuant du même facteur la distance focale des métasurfaces.

Le principe d'architecture des métasurfaces est décrit par exemple dans CHEN, Wei Ting, ZHU, Alexander Y., et CAPASSO, Federico. Flat optics with dispersion-engineered metasurfaces. Nature Reviews Materials, 2020, vol. 5, no 8, p. 604-620.

Dans un mode de réalisation, le système comprend une matrice de N × M détecteurs.

Avantageusement, des détecteurs ayant des caractéristiques différentes peuvent être adaptés aux métasurfaces associées. De plus, il est possible d'avoir des détecteurs fonctionnant à des longueurs d'ondes différentes (par exemple, dans le visible et dans l'infrarouge). De plus, les détecteurs ayant une grande surface de détection sont plus couteux. Ainsi, en ayant une matrice de détecteurs ayant une surface de détection plus faible, il est possible de réduire les coûts du système.

Selon l'invention, le système comprend un élément dispersif.

Dans un mode de réalisation, deux des métasurfaces de la matrice de métasurfaces sont différentes.

Dans un mode de réalisation, les détecteurs sont placés dans plusieurs plans.

Dans un mode de réalisation, au moins deux des plans dans lesquels sont placés les détecteurs ne sont pas parallèles.

Avantageusement, il est possible d'adapter la position des détecteurs en fonction du sous-faisceau à détecter. De plus, en étant placé sur plusieurs plans, il est possible d'optimiser l'espace utilisé par les détecteurs.

Dans un mode de réalisation, le substrat d'au moins l'une des métasurfaces est courbe.

Dans un mode de réalisation, une distance prédéfinie sépare chaque nano-élément des métasurfaces, la distance prédéfinie étant une distance variable.

Dans un mode de réalisation, au moins deux des nano-éléments des métasurfaces ont une épaisseur différente et/ou une hauteur différente.

Dans un mode de réalisation, les nano-éléments sont de forme cylindrique.

Avantageusement, en variant les paramètres de l'architecture des métasurfaces, tels que la forme du substrat et des nano-éléments, et la distance entre les nano-éléments, il est possible de répondre à de nombreuses applications et à la multifonctionnalité demandé dans les systèmes d'imagerie émergents.

Dans un mode de réalisation, les métasurfaces sont fabriquées par impression 3D.

Avantageusement, l'impression 3D permet de faciliter la fabrication et de réaliser des designs de métasurfaces qui sont couteuses et/ou difficilement réalisables avec d'autres techniques de fabrications classiques.

Dans un mode de réalisation, l'imageur est un imageur télécentrique.

Avantageusement, la télécentricité permet aux faisceaux lumineux d'avoir une incidence normale dans le plan de la fente. En sortie de collimateur, les sous-faisceaux arrivent ainsi avec la même incidence sur la matrice de métasurfaces, ce qui réduit le nombre de designs différents à traiter.

### BRÈVE DESCRIPTION DES DESSINS

L'invention sera mieux comprise et d'autres avantages apparaîtront à la lecture de la description qui va suivre donnée à titre non limitatif et grâce aux figures parmi lesquelles :
[Fig.1] la figure 1 illustre un exemple de système d'imagerie conventionnel ;
[Fig. 2] la figure 2 illustre un exemple de système d'imagerie selon l'invention ;
[Fig. 3] la figure 3 illustre un exemple de système d'imagerie selon l'invention ;
[Fig. 4] la figure 4 illustre un exemple de points d'impact de sous-faisceaux avec le détecteur ;
[Fig. 5a] la figure 5a illustre un exemple de métasurfaces ;
[Fig. 5b] la figure 5b illustre un exemple de métasurfaces ;
[Fig.5c] la figure 5c illustre un exemple de métasurfaces ;
[Fig. 5d] la figure 5d illustre un exemple de métasurfaces ; et
[Fig. 6] la figure 6 représente un exemple de système télémétrique selon un exemple.

### DESCRIPTION DÉTAILLÉE

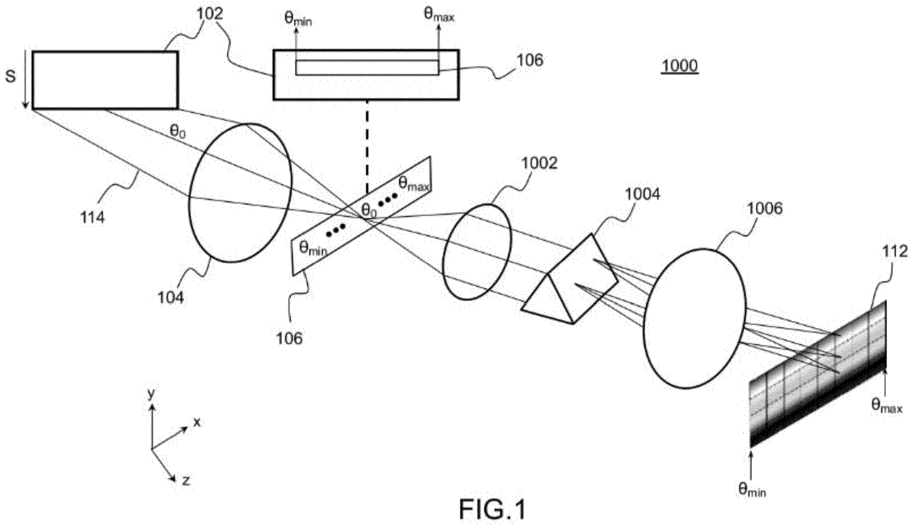

La figure 1 illustre un exemple d'imageur hyperspectral conventionnel 1000 de l'état de l'art. Un objet 102 est imagé par un premier imageur 104 sur une fente d'entrée 106, dont les dimensions occultent une partie des champs en provenance de l'objet 102. Des faisceaux provenant de la fente, avec un angle de champs de θₘᵢₙ à θₘₐₓ, sont collimatés par un collimateur 1002. Des composantes spectrales d'une région d'intérêt sont alors séparées par un élément dispersif 1004, tel un prisme ou un réseau de diffraction, puis imagées sur un détecteur 112 par un second imageur 1006 (par exemple, un système de multiples lentilles). Chaque champ est réparti le long de colonnes d'un détecteur 1006 (axe x), à chaque longueur d'onde le long des lignes (axe y) du détecteur 1006. Un balayage de l'objet 102 est nécessaire pour imager l'intégralité de l'objet 102. En effet, le système est en configuration « push-broom », c'est-à-dire qu'une section horizontale de l'objet 102 est imagé à la fois, comme illustré dans la figure 1, et qu'un balayage est effectué, par exemple dans la direction s, une direction verticale, afin d'imager plusieurs sections de l'objet 102.

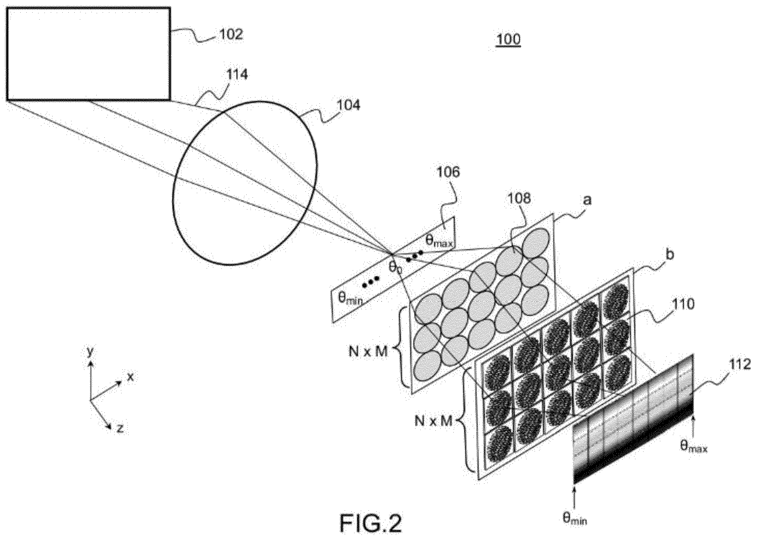

La figure 2 illustre un exemple de système d'imagerie 100 permettant de détecter une image d'un objet 102 selon la présente invention. De préférence, le système d'imagerie est un système d'imagerie 100 est un système d'imagerie hyperspectral. Dans la présente invention, la combinaison du collimateur 1002, de l'élément dispersif 1004 et l'imageur 1006 du système d'imagerie hyperspectral conventionnel 1000 décrit dans la figure 1 a été remplacée par une matrice de collimateurs 108 et une matrice de métasurfaces 110 permettant la miniaturisation du système d'imagerie hyperspectral.

L'objet 102 peut être par exemple n'importe quel objet étudié dans des applications de l'agriculture, l'astronomie, la surveillance, etc. L'objet 102 est dans une scène d'intérêt.

Le système d'imagerie hyperspectral 100 comprend un imageur 104 configuré pour recevoir un faisceau lumineux 114 provenant de l'objet 102. L'imageur 104 est par exemple un télescope ou une caméra.

Le système d'imagerie hyperspectral 100 comprend également une fente 106 configuré pour recevoir le faisceau lumineux 114 provenant de l'imageur 104. La fente 106 est placée dans le plan image de l'imageur 104 (soit dans le plan focal pour un objet dans une scène à l'infini). La fente 106 permet de séparer les différents champs ayant des angles d'incidence différents. La fente permet également de supprimer des faisceaux parasites de provenant de l'objet 102.

Le système d'imagerie hyperspectral 100 comprend également une matrice de collimateurs 108 comprenant *N* × *M* collimateurs 108 placés dans un premier plan a et configurée pour collimater le faisceau lumineux 114 provenant de la fente 106 en une pluralité de *N* × *M* sous-faisceaux. Le plan a est un plan dont un des côté est parallèle à un axe y représentant les longueurs d'ondes et dont un des côté est parallèle à un axe x représentant le champ. Dans un mode de réalisation, les axes x et y étant perpendiculaires. Le plan a est également orthogonal à l'axe optique z, ce dernier étant perpendiculaire aux axes x et y. Les différents sous-champs séparés par la fente 106 sont reçu par différents collimateurs 108 de la matrice de collimateurs 108, qui sépare ainsi spatialement des portions du champ incident. Les collimateurs peuvent être par exemple des microlentilles.

Le système d'imagerie hyperspectral 100 comprend également une matrice de métasurfaces 110 comprenant *N* × *M* métasurfaces 110 placées dans un deuxième plan b. Le deuxième plan b est parallèle au premier plan a. Une des métasurfaces de la matrice de métasurfaces est configurée pour recevoir un des sous-faisceaux provenant d'un collimateur 108 associé de la matrice de collimateurs 108. Dans un exemple, le deuxième plan b des métasurfaces est un plan moyen dans lequel se trouvent les métasurfaces mais les métasurfaces peuvent être placées avec un angle par rapport au plan b moyen.

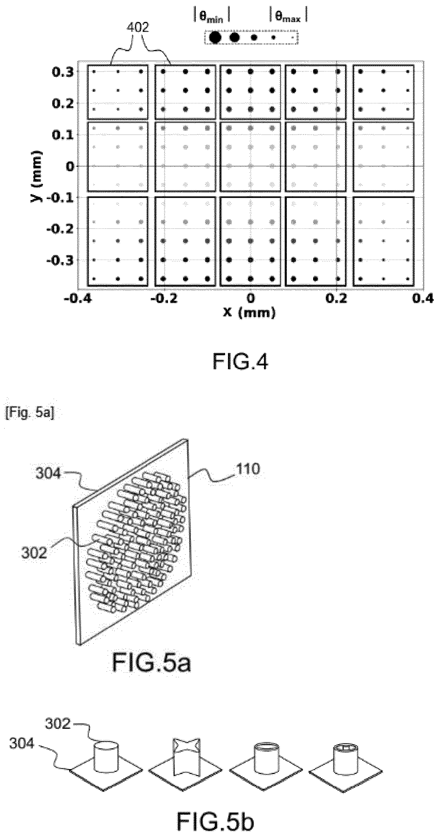

Comme illustré dans la figure 5a, chaque métasurface 110 comprend un substrat 304 et des nano-éléments 302.

Le système d'imagerie hyperspectral 100 comprend également un ou plusieurs détecteurs 112.

Les métasurfaces 110 de la matrice de métasurfaces 110 sont agencées de façon à focaliser et disperser le sous-faisceau associé dans un plan c du ou des détecteurs. En particulier, les métasurfaces 110 permettent de contrôler la focalisation des différents sous-champs aux différentes longueurs d'ondes sur le détecteur 112.

Ainsi chaque portion de champ est dirigée vers la matrice de métasurfaces 110, dont les propriétés dispersives permettent de simultanément focaliser et disperser un continuum de longueur d'onde sur une plage spectrale donnée. La scène imagée aux différentes longueurs d'onde est alors reconstituée en sommant la réponse optique de chaque métasurface 110 dans le plan du détecteur 112.

Le champ de vision est spatialement décomposé en N gammes de sous-champs, chaque gamme étant adressée par un sous-système indépendant des sous-systèmes voisins, et les N gammes de sous-champs étant dans la direction x. Cette répartition de la fonctionnalité optique permet de réduire les contraintes d'opération de chaque composant, et ainsi d'élargir le champ de vision tout en conservant une fonction spectrale nécessaire à la séparation des longueurs d'onde. Le ou les détecteurs 112 utilisés dépendent de la bande spectrale que l'on observe. Par exemple, le ou les détecteurs 112 peuvent être un ou des détecteurs infrarouge ou visible. Dans un exemple, un seul détecteur 112 est utilisé, comme illustré dans la figure 2. Le détecteur 112 est dans un plan qui comprend des colonnes le long de l'axe x et des lignes le long de l'axe y (ici étant également un axe λ représentant les longueurs d'onde). Dans cet exemple, le détecteur 112 reçoit les sous-faisceaux de la matrice de métasurfaces 110 focalisés et dispersés par les métasurfaces 110. Chaque métasurface 110 de la de matrice de métasurface 110 adresse séparément des portions de champs qui sont ensuite détectées par des portions correspondantes du détecteur.

La détection par le détecteur 112 est une image géométrique de la fente 106. En particulier, toutes les longueurs d'ondes sont présentent en chaque point de la fente 106 et sont ensuite imagées sur le détecteur 112 le long de l'axe x. Chaque point de la fente 106 est donc imagé sur un point du détecteur 112 le long de l'axe x.

Selon l'invention, le système 100 comprend un élément dispersif 1004.
L'élément dispersif 1004 (tel qu'un prime ou un réseau) est placé entre la matrice de microlentilles 108 et la matrice de métasurfaces 110, le long de l'axe z. Ainsi, dans cet exemple, une dispersion le long de l'axe y est également obtenue. La détection par le détecteur 112 est donc de la largeur de la fente 106 (le long de l'axe x), avec une dispersion de la longueur d'onde dans la direction x. Par exemple, la figure 4 représente un exemple des points d'impact entre les sous-faisceaux et le détecteur 112. En particulier, l'impact entre les sous-faisceaux et le plan du détecteur 112 forme un continuum de champs incidents qui est imagé le long des colonnes du capteur (c'est-à-dire le long de l'axe x), et les composantes spectrales associées à chaque champ sont réparties le long des lignes du détecteur (c'est-à-dire le long de l'axe y). Dans un cas idéal, la séparation des caractéristiques sous-faisceaux (ayant une longueur d'onde λ et un angle de champ θ) se fait dans deux directions orthogonales au niveau du détecteur 112. La figure 4 représente un nombre discret de points de champs et de longueurs d'onde associées par soucis de visibilité, mais il existe une infinité de sous-champs et de longueurs d'onde entre chaque point. Comme représenté sur la figure 4, les rectangles 402 représentent des portions de champ et de longueur d'onde adressées séparément par une métasurface de la matrice de métasurfaces 110. Dans un exemple illustré figure 4, les *N* ×M métasurfaces adressent individuellement la même gamme de sous-champs (axe x), mais un nombre réduit de longueurs d'onde à mesure que celles-ci tendent vers la limite basse de la bande spectrale sondée. Dans la figure 4 la limite basse de la bande spectrale sondée correspond à la valeur la plus faible de y et la limite haute correspond à la valeur la plus élevée de y. Dans cette configuration, c'est-à-dire avec un élément dispersif 1004 placé entre la fente et la matrice de métasurface, il est possible de simplifier la fabrication des métasurfaces. En effet, dans cette configuration, les métasurfaces permettent la focalisation mais une partie de la dispersion est assurée par l'élément dispersif, ce qui simplifie le design des métasurfaces et les paramètres à considérer pour leur fabrication.

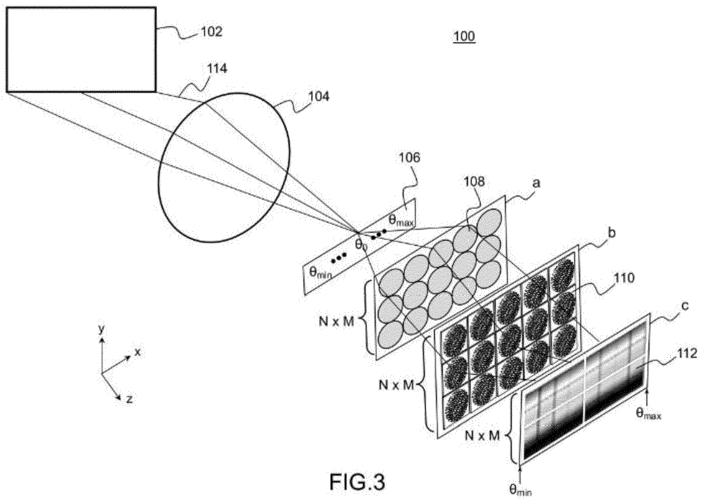

Comme représenté dans la figure 3, dans un autre exemple, le système d'imagerie hyperspectral 100 comprend plusieurs détecteurs qui sont placés dans un plan c parallèle aux plans a et b. Ainsi, pour les détections de large surface, il peut être avantageux d'utiliser plusieurs détecteurs, limitant les coûts du système et permettant d'utiliser des détecteurs ayant des caractéristiques différentes.

Dans un autre exemple, le système 100 peut comprendre une matrice de *N* × *M* détecteurs 112. Ainsi, chaque détecteur 112 de la matrice de *N* × *M* détecteurs 112 peut détecter les sous-faisceaux d'une métasurface 110 de la matrice de *N* × *M* métasurfaces associée. Les détecteurs 112 de la matrice de détecteurs 112 peuvent être placés dans un même plan. Alternativement, les détecteurs 112 peuvent être placés dans plusieurs plans c, d, e. Les plans c, d, e dans lesquels sont placés les détecteurs 112 peuvent être parallèles ou au moins deux des plans dans lesquels sont placés les détecteurs 112 peuvent ne pas être parallèles. Ainsi, en plaçant les détecteurs 112 sur plusieurs plans, il est possible de minimiser l'encombrement du système d'imagerie hyperspectral 100 et d'optimiser la détection des sous faisceaux de la métasurface associée à chaque détecteur.

Il est noté que les éléments du système d'imagerie hyperspectral décrits ci-dessus, c'est-à-dire l'imageur 104, la fente 106, la matrice de collimateurs 108, la matrice de métasurfaces 110 et les détecteurs sont placés le long de l'axe optique z.

Comme illustré dans les figures 5a à 5c, chaque métasurface 110 comprend un substrat 304 et des nano-éléments 302. Dans les exemples des figures 5a à 5c, le substrat est plan. Dans un autre exemple, le substrat d'au moins l'une des métasurfaces 110 est courbe. Un substrat courbe permet d'augmenter le nombre de variables décrivant la métarsurface et donc de prendre en compte des contraintes de dimensionnement supplémentaires (performance, volume...).

Dans un exemple, toutes les métasurfaces de la matrice de métasurfaces sont identiques. Dans un autre exemple, au moins deux des métasurfaces de la matrice de métasurfaces sont différentes. En effet, aux moins deux des métasurfaces peuvent avoir des designs différents, comme par exemple des nano-éléments 302 de forme et/ou de taille et/ou en matériaux différents, et/un nombre de nano-éléments 302 différent, et/ou un agencement des nano-éléments 302 différent, et/ou un substrat de taille et/ou en matériau différents. La matrice comportant des métasurfaces ayant un design différent permet optimiser l'ensemble du système 100 (par exemple en permettant la correction de la distorsion le long de l'axe x, optimiser la dispersion spectrale le long de l'axe y...).

La fonction optique souhaitée, c'est-à-dire la dispersion et la focalisation des sous-faisceaux dans le plan du ou des détecteurs 112 peut être réalisée en modifiant les caractéristiques géométriques et la proximité relative de nano-éléments 302. Pour une application dans le spectre visible, il est préférable de choisir des nano-éléments 302 en matériaux diélectriques dont l'indice de réfraction est situé entre 1.45 et 3. La hauteur h des nano-éléments 302 est choisie suffisamment importante pour moduler la phase de la lumière incidente sur une amplitude d'au moins 2π. Par exemple, pour un matériau d'indice n = 2.3 dans le visible, la hauteur h des nano-éléments 302 est de l'ordre de 900 nm. La distance d entre les nano-éléments peut être choisie de façon à être inférieure à la longueur d'onde pour éviter localement la diffraction d'ordres parasites, typiquement entre 200 et 400 nm. La multiplicité de ces paramètres (hauteur h, épaisseur e, distance d, indice du matériau n...) augmente les degrés de liberté disponibles pour concevoir un système d'imagerie hyperspectral multifonctionnel. Si la bande spectrale sondée est différente, la géométrie des nano-éléments 302 et les matériaux peuvent être modifiés en conséquence en fonction des rapports épaisseur e des nano-éléments 302 sur longueur d'onde et hauteur h des nano-éléments 302 sur longueur d'onde, ces rapport étant généralement compris entre 0.5 et 1.

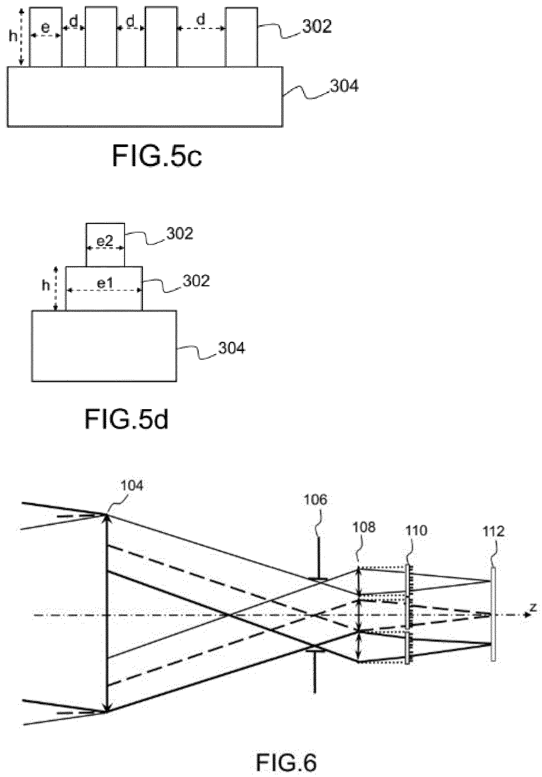

Comme indiqué dans la figure 5c, une distance prédéfinie (d) sépare chaque nano-élément 302 des métasurfaces. La distance prédéfinie d peut être égale entre chaque nano-élément 302. Alternativement, la distance d peut être variable.

Dans l'exemple de la figure 5c, les nano-éléments 302 ont la même hauteur h et la même épaisseur e. Cependant, dans un autre exemple, au moins deux des nano-éléments 302 des métasurfaces 112 ont une épaisseur e différente, et/ou une hauteur h différente.

Comme indiqué dans la figure 5b, selon un mode de réalisation les nano-éléments 302 sont de forme cylindrique. En effet, les nano-éléments peuvent être des cylindres pleins, des cylindres creux, des cylindres comprenant un autre cylindre, ou encore des cylindres de base quelconque (par exemple une base en forme de croix sur la figure 5b). Dans un autre exemple, les nano-éléments 302 ont une forme parallélépipédique.

L'architecture des métasurfaces (c'est-à-dire, la distance entre les nano-éléments, l'épaisseur des nano-éléments, la hauteur h des nano-éléments, la forme des nano-éléments, etc.) dépendent de l'application de l'imageur spectral. Par exemple, l'architecture dépendra de si l'objet est observé dans le spectre visible ou dans l'infrarouge et de l'angle d'incidence.

Comme illustré dans la figure 5d, dans un exemple, deux nano-éléments 302 peuvent être empilés. Dans cet exemple, deux nano-éléments 302 ayant des épaisseurs e₁, e₂ différentes sont empilés les uns sur les autres sur le substrat 304. Les nano-éléments 302 peuvent être à base carré ou à base ronde.

A titre d'exemple pour une détection entre 600 et 700 nm (100 nm de bande spectrale), un champ compris entre -8° et +8°, la distance centre à centre entre les deux nano-éléments 302 peut être par exemple inférieure à 600 nm. Chaque nano-élément 302 peut être caractérisé par une hauteur h comprise entre 700 nm et 1 µm, et par une épaisseur e variant entre 70 nm et 330 nm. Les matériaux des nano-éléments 302 doivent être caractérisés par un indice de réfraction suffisamment élevé pour transformer l'onde incidente en un front d'onde sphérique convergent, typiquement supérieurs à 2. De plus, les matériaux doivent être transparents, ou faiblement absorbants sur la plage spectrale d'intérêt de manière à maximiser le flux au niveau du détecteur 112.

Comme indiqué ci-dessus, le système d'imagerie hyperspectral 100 comprend une matrice de *n* × *m* collimateurs 108 et une matrice de *n* × *m* métasurfaces 110. Le nombre de collimateurs 108 et de métasurfaces 110 des matrices *n* × *m* dépend d'un ensemble de paramètres liés à l'architecture optique du système d'imagerie hypersectrale 100. En effet, ces paramètres comprennent une ouverture de l'imageur 104, la distance focale de l'imageur 104, la distance entre la fente 106 et les collimateurs 108, le diamètre des collimateurs 108 et la surface des métasurfaces 108.

Dans un exemple, l'imageur 104 est un imageur télécentrique. Cela permet de compacter l'architecture optique du système d'imagerie hyperspectral 100. En effet, il est préférable de disposer d'un imageur télécentrique en amont de la fente 106, comme illustré dans la figure 6. Comme indiqué ci-dessus, plusieurs sous-champs sont reçus au niveau de l'imageur 104 et de la fente 106. La télécentricité permet aux faisceaux lumineux 114 de chaque sous-champ d'avoir une incidence moyenne normale dans le plan de la fente 106. En sortie des collimateurs 108, les sous-champs arrivent ainsi avec la même incidence sur la matrice de métasurfaces 110, ce qui réduit le nombre de designs différents à traiter.

De plus, la télécentricité permet de juxtaposer chaque métasurface 108 avec la même orientation, de préférence perpendiculaire à l'axe optique z. Si le système d'imagerie hyperspectral 100 n'est pas télécentrique, il peut être nécessaire de modifier l'orientation de chaque métasurface 110 par rapport à l'axe optique z de quelques degrés. En effet, le plan b des métasurfaces est sensiblement parallèle au plan a des collimateurs mais les métasurfaces peuvent être orientées avec un angle de quelques degrés par rapport au plan b (par exemple, 1° ou 2°).

Il est noté que dans les exemples ci-dessus, une partie de l'objet 102 est imagée. Un balayage l'objet 102 est nécessaire pour imager l'intégralité de l'objet 102, comme dans le système conventionnel décrit dans la figure 1. Ainsi, le système 100 est également en configuration « push-broom », c'est-à-dire qu'une section horizontale de l'objet 102 est imagé à la fois, comme illustré dans la figure 1, et qu'un balayage est effectué, par exemple dans la direction s (parallèle à l'axe y), une direction verticale, afin d'imager plusieurs sections de l'objet 102.

Les métasurfaces décrites dans cette invention peut être par exemple des métasurfaces telles que décrites dans CHEN, Wei Ting, ZHU, Alexander Y., et CAPASSO, Federico. Flat optics with dispersion-engineered metasurfaces. Nature Reviews Materials, 2020, vol. 5, no 8, p. 604-620. Il est possible de fabriquer les métasurfaces 108 par gravure. Par exemple, le substrat 302 peut être en saphir ou SiO₂ sur lequel une couche de TiO₂, GaN, Si₃N₄ ou encore silicium monocristallin est déposée afin de graver les nano-éléments 304 dans la couche de TiO₂. Dans un exemple, les métasurfaces 112 peuvent être fabriquées par impression 3D. L'impression 3D permet de faciliter la fabrication et d'utiliser diverses matériaux qui ne sont pas possible d'utiliser aves les méthodes de fabrication conventionnelles.

Il est noté que, dans les systèmes d'imagerie conventionnels, les différents points de champ imagés ne focalisent pas sur la même ligne du détecteur. Cette distorsion géométrique de la fonction d'étalement d'un point est appelée *smile* et est souvent observée sur les imageurs hyperspectraux. En effet, dans les systèmes d'imagerie conventionnels, le collimateur 1002 et l'imageur 1006 génèrent de la distorsion d'autant plus forte que le champ est fort. Le système d'imagerie hyperspectral 100 de la présente invention permet de pallier cet effet en divisant la gamme de champ perçue par chaque métasurface 108. En particulier, chaque métasurface reçoit un sous-champ beaucoup plus petit (champ divisé par N), ce qui permet de réduire la distorsion.

Dans l'invention présentée ci-dessus, en divisant le champ de vision en multiples sous-champs adressés individuellement par un collimateur 108 et une métasurface 110, la complexité de la réponse optique attendue (c'est-à-dire réponse grand champ et à plusieurs longueurs d'onde) par un seul composant est diluée sur un ensemble de sous-composants. L'utilisation de métasurfaces 110 dans une architecture optique multifonctionnelle présente plusieurs avantages. En particulier, les métasurfaces sont des composants ultra-minces, dont l'épaisseur excède rarement le millimètre en tenant compte de l'épaisseur du substrat 304. Ainsi, le système d'imagerie hyperspectral 100 comprenant des métasurfaces 108 est plus léger que le système conventionnel, souvent constitué de matériaux réfractifs massifs dont l'épaisseur est plus importante. De plus, en utilisant des composants dispersifs conventionnels comme un réseau de diffraction, la séparation des longueurs d'onde est fixée par la période du réseau. En utilisant les multiples degrés de liberté des métasurfaces 108, il est possible de contrôler la dispersion de façon arbitraire, et ainsi générer une fonction optique différente à chaque longueur d'onde sur la plage spectrale d'intérêt. Ce contrôle des propriétés optiques à chaque longueur d'onde offre alors un plus vaste choix d'architectures pouvant répondre au besoin opérationnel. Enfin, le flux perçu au niveau du détecteur peut être maintenu constant malgré la miniaturisation des composants, et ce en diminuant du même facteur la distance focale des métasurfaces 108.

Bien que l'invention ait été illustrée et décrite en détail à l'aide d'un mode de réalisation préféré, l'invention n'est pas limitée aux exemples divulgués. D'autres variantes peuvent être déduites par l'Homme du métier sans sortir du cadre de protection de l'invention revendiquée. Par exemple, l'Homme du métier comprendra que les métasurfaces décrites ci-dessus ne sont que des exemples et que les matériaux et l'architecture décrites dépendent de l'application du système d'imagerie hyperspectral. De même, les matrices de métasurfaces et de collimateurs ne sont représentées qu'à titre d'exemple.

## Revendications

1. Système d'imagerie (100) permettant de détecter une image d'un objet (102), le système d'imagerie comprenant :
- un imageur (104) configuré pour recevoir un faisceau lumineux (114) provenant de l'objet ;
- une fente (106) configuré pour recevoir le faisceau lumineux provenant de l'imageur ;
- une matrice de collimateurs (108) comprenant *N* × *M* collimateurs placés dans un premier plan (a) et configurée pour collimater le faisceau lumineux provenant de la fente en une pluralité de *N* × *M* sous-faisceaux ;
- une matrice de métasurfaces (110) comprenant *N* × *M* métasurfaces placées dans un deuxième plan (b), le deuxième plan étant parallèle au premier plan, une des métasurfaces de la matrice de métasurfaces étant configurée pour recevoir un des sous-faisceaux provenant d'un collimateur associé de la matrice de collimateurs, chaque métasurface comprenant un substrat (304) et des nano-éléments (302) ;
- un ou plusieurs détecteurs (112) ; et
- un élément dispersif (1004),
les nano-éléments d'une métasurfaces de la matrice de métasurfaces étant agencés de façon à focaliser et disperser spectralement le sous-faisceau associé dans un plan du ou des détecteurs.

2. Système d'imagerie selon la revendication 1, dans lequel au moins deux des métasurfaces de la matrice de métasurfaces sont différentes.

3. Système d'imagerie selon l'une des revendications précédentes, dans lequel le système comprend une matrice de *N* × *M* détecteurs.

4. Système d'imagerie selon la revendication 3, dans lequel les détecteurs sont placés dans plusieurs plans (c, d, e).

5. Système d'imagerie selon la revendication 4, dans lequel au moins deux des plans dans lesquels sont placés les détecteurs ne sont pas parallèles.

6. Système d'imagerie selon l'une des revendications précédentes, dans lequel le substrat d'au moins l'une des métasurfaces est courbe.

7. Système d'imagerie selon l'une des revendications précédentes, dans lequel les nano-éléments sont de forme cylindrique.

8. Système d'imagerie selon l'une des revendications précédentes, dans lequel les métasurfaces sont fabriquées par impression 3D.

9. Système d'imagerie selon l'une des revendications précédentes, dans lequel l'imageur est un imageur télécentrique.

## Patentansprüche

1. Bildgebungssystem (100), das ermöglicht, ein Bild eines Objekts (102) zu erfassen, wobei das Bildgebungssystem Folgendes umfasst:
- einen Bildgeber (104), der konfiguriert ist, um ein von dem Objekt stammendes Lichtbündel (114) zu empfangen;
- einen Spalt (106), der konfiguriert ist, um das von dem Bildgeber stammende Lichtbündel zu empfangen;
- eine Matrix von Kollimatoren (108), umfassend *N* × *M* Kollimatoren, die in einer ersten Ebene (a) platziert sind, und die konfiguriert ist, um das von dem Spalt stammende Lichtbündel in eine Vielzahl von *N* × *M* Teilbündeln zu kollimieren;
- eine Matrix von Metaflächen (110), umfassend *N* × *M* Metaflächen, die in einer zweiten Ebene (b) platziert sind, wobei die zweite Ebene parallel zur ersten Ebene ist, wobei eine der Metaflächen der Matrix von Metaflächen konfiguriert ist, um eines der von einem zugeordneten Kollimator der Matrix von Kollimatoren stammendes Teilbündel zu empfangen, wobei jede Metafläche ein Substrat (304) und Nanoelemente (302) umfasst;
- einen oder mehrere Detektoren (112); und
- ein Streuelement (1004),
wobei Nanoelemente einer Metafläche der Matrix von Metaflächen derart angeordnet sind, dass das zugeordnete Teilbündel in einer Ebene des oder der Detektoren gebündelt und spektral gestreut wird.

2. Bildgebungssystem nach Anspruch 1, wobei sich mindestens zwei der Metaflächen der Matrix von Metaflächen unterscheiden.

3. Bildgebungssystem nach einem der vorstehenden Ansprüche, wobei das System eine Matrix von *N* × *M* Detektoren umfasst.

4. Bildgebungssystem nach Anspruch 3, wobei die Detektoren in mehreren Ebenen (c, d, e) platziert sind.

5. Bildgebungssystem nach Anspruch 4, wobei mindestens zwei der Ebenen, in denen die Detektoren platziert sind, nicht parallel sind.

6. Bildgebungssystem nach einem der vorstehenden Ansprüche, wobei das Substrat mindestens einer der Metaflächen gekrümmt ist.

7. Bildgebungssystem nach einem der vorstehenden Ansprüche, wobei die Nanoelemente zylinderförmig sind.

8. Bildgebungssystem nach einem der vorstehenden Ansprüche, wobei die Metaflächen durch 3D-Druck gefertigt sind.

9. Bildgebungssystem nach einem der vorstehenden Ansprüche, wobei der Bildgeber ein telezentrischer Bildgeber.

## Claims

1. Imaging system (100) for detecting an image of an object (102), the imaging system comprising:
- an imager (104) configured to receive a light beam (114) from the object;
- a slit (106) configured to receive the light beam from the imager;
- an array of collimators (108) comprising *N* × *M* collimators positioned in a first plane (a) and configured to collimate the light beam from the slit into a plurality of *N* × *M* sub-beams;
- an array of metasurfaces (110) comprising *N* × *M* metasurfaces positioned in a second plane (b), the second plane being parallel to the first plane, one of the metasurfaces of the array of metasurfaces being configured to receive one of the sub-beams from an associated collimator of the array of collimators, each metasurface comprising a substrate (304) and nano-elements (302);
- one or more detectors (112); and
- a dispersive element (1004),
the nano-elements of a metasurface in the array of metasurfaces being arranged so as to spectrally focus and disperse the associated sub-beam into a plane of the detector(s).

2. Imaging system according to claim 1, wherein at least two of the metasurfaces in the array of metasurfaces are different.

3. Imaging system according to any one of the preceding claims, wherein the system comprises an array of *N* × *M* detectors.

4. Imaging system according to claim 3, wherein the detectors are positioned in a plurality of planes (c, d, e).

5. Imaging system according to claim 4, wherein at least two of the planes in which the detectors are positioned are not parallel.

6. Imaging system according to any one of the preceding claims, wherein the substrate of at least one of the metasurfaces is curved.

7. Imaging system according to any one of the preceding claims, wherein the nano-elements are cylindrical in shape.

8. Imaging system according to any one of the preceding claims, wherein the metasurfaces are manufactured by 3D printing.

9. Imaging system according to any one of the preceding claims, wherein the imager is a telecentric imager.
